# EUROPEAN PATENT SPECIFICATION

(11) **EP 1 480 418 B1**
(45) Date of publication and mention of the grant of the patent: **14.05.2008**
(21) Application number: 04011769.9
(22) Date of filing: 18.05.2004
(51) Int. Cl.: H04M 1/02, E05D 11/10

(54) **Mobile communication terminal of slide type with hinge mechanism**
Verschiebbares mobiles Kommunikationsendgerät mit Scharniermechanismus
Terminal coulissant mobile de télécommunication avec mécanisme de charnière

(30) Priority: 23.05.2003 KR 2003032830
(43) Date of publication of application: 24.11.2004
(73) Proprietor: SK Teletech Co., Ltd., Seoul 135-984 (KR)
(72) Inventor: Lim, Yong-Ha, Seoul 157-913 (KR)
(74) Representative: Liesegang, Roland

(56) References cited:
- US-A- 5 485 517
- US-A1- 2002 123 366
- US-A1- 2002 137 476
- US-A1- 2002 147 026
- US-A1- 2003 064 688

## Description

### BACKGROUND OF THE INVENTION

### Field of the Invention

The present invention relates to a slide type mobile communication terminal according to the preamble of claim 1. A communication terminal of this type is known from US 2002/0137476 A1.

The present invention relates generally to mobile communication terminals of slide types, and more particularly, to a mobile communication terminal of a slide type, which applies an elastic force to a cover, which is assembled with an upper surface of a main body, to allow the cover to automatically slide to a maximum opened position or a completely closed position on the main body.

### Description of the Related Art

Mobile communication terminals have been widely used globally. Recently, to meet the needs of users, the conventional mobile communication terminals with a variety of functions and designs have been proposed and marketed. The conventional mobile communication terminals have been developed in their types from bar types to flip types, flip-up types and folder types. US 2002/0123366 A1 discloses a hinge clutch mechanism for a mobile phone of the flip-up type. The hinge clutch mechanism includes an elongated cam shaft extending through a face cam member, a cam follower, and a compression spring and partially through a hollow retaining member. It is implemented so that upon rotation of the lid, once the peaks of the cam follower are passed, the action of the spring assists in completing the rotation of the lid to its fully open or closed position, respectively.

Recently, the terminals of the folder types are most widely and preferably used, because the terminals of the folder types have wide spaces as conventional wide LCD (liquid crystal display) modules can be adopted as display devices of the terminals, and, furthermore, the terminals of the folder types are folded into small sizes, thus being more conveniently carried by users compared to the other type of terminals.

In the meantime, terminals of slide types, which include wide LCD modules having predetermined sizes similar to that of the terminals of the folder types, and, simultaneously accomplish the recent trend of smallness, have been proposed. In each of the conventional terminals of the slide types, a cover is opened on a main body by being longitudinally slid by a user on the main body to a predetermined position. Furthermore, the conventional terminals of the slide type satisfy the continuously changing tastes of users in comparison with the conventional terminals of the folder types.

In the conventional terminals of the slide type, the cover is constructed to slide vertically relative to the main body to about 1/2 the length of the main body when opening the main body to use it (the sliding motion of the cover is typically limited to about 1/2 the length of the main body to obtain a stability of the terminal, but the cover may be designed to be opened more than 1/2 the length of the main body). In general, a 3 * 4 keypad assembly is provided on the cover, while a display is provided on a front surface of the main body.

The cover of the conventional slide type terminal is guided on the main body by a guide unit during the sliding motion of the cover relative to the main body. Typically, the guide unit comprises a guide rib which is provided on one of the cover and the main body. A guide slit is provided on a remaining one of the cover and the main body to correspond to the guide rib, thus obtaining the sliding motion of the cover relative to the main body. Furthermore, a stopper is provided on each of predetermined positions at which the sliding motion of the cover is finished to completely open or close the main body. Therefore, the cover is prevented from undesirably moving at the completely opened and closed positions on the main body.

However, in the conventional slide type terminal with the guide unit and the stoppers, the cover is prevented from undesirably moving on the main body only when the cover is completely opened or closed.

Therefore, the cover may undesirably move during the opening and closing motions of the cover, thus sometimes causing wrong operations of the terminal without regard to the user. Furthermore, when it is desired that the cover is completely opened or closed on the main body, the user must slides the cover on the main body until the cover is fastened by the stopper. Thus, the structure of the conventional terminal of the slide type causes inconvenience to the user.

### SUMMARY OF THE INVENTION

The present invention provides a slide type mobile communication terminal according to claim 1.

Accordingly, the present invention has been made keeping in mind the above problems occurring in the prior art, and an object of the present invention is to provide a mobile communication terminal of a slide type, in which a cover automatically slides to a completely opened or closed position on a main body, even when a user dose not move the cover to the completely opened or completely closed position on the main body.

Another object of the present invention is to provide a mobile communication terminal of a slide type, which has a structure possible to reliably maintain the cover in the completely opened or completely closed position on the main body without using any separate stopper.

In order to accomplish the above object, the present invention provides a mobile communication terminal of a slide type, including a main body, a cover assembled with an upper surface of the main body to slide longitudinally on the main body, and a slide control unit to apply an opening force to the cover in an opening direction when the cover has slid in the opening direction on the main body to reach at least a predetermined opened position, and to apply a closing force to the cover in a closing direction when the cover has slid in the closing direction on the main body to reach at least a predetermined closed position.

The mobile communication terminal may further include at least one guide channel having a predetermined length in a direction of a sliding motion of the cover and provided on a predetermined portion of a contact surface of the cover which is in contact with the main body, and a slide projection provided on a predetermined portion of a contact surface of the main body to correspond to the guide channel of the cover, so that the slide projection slides along the guide channel while being coupled to the guide channel.

The slide control unit includes a hinge, having: a coupling part inserted into a predetermined portion of the upper surface of the main body; and a rotating part provided on an upper end of the coupling part so that at least a part of the rotating part is exposed to an outside of the main body while the coupling part is inserted in the predetermined portion of the upper surface of the main body. The rotating part is rotated around a rotating axis thereof which is perpendicular to the upper surface of the main body. The slide control unit may further include a swing link having a bar-shaped appearance and a predetermined length shorter than a width of the main body, with a first end coupled to the rotating part of the hinge to allow the swing link to be perpendicular to the rotating axis of the rotating part, and a second end coupled to a lower surface of the cover to slide on the lower surface of the cover in a latitudinal direction of the cover.

The mobile communication terminal may further include a link slot having a predetermined size to receive a link projection of the swing link therein. The link slot is provided on a predetermined portion of the lower surface of the cover while extending in the latitudinal direction of the cover.

The rotating part of the hinge may include a streamlined cam provided on an inner end of the rotating part, and the coupling part of the hinge may include a shaft coupled at an end thereof to the rotating part while being axially inserted in the coupling part, a spring placed to surround the shaft, and a slider provided between the spring and the streamlined cam to move in a longitudinal direction of the shaft, with a streamlined slider groove to allow the streamlined cam to be seated into and removed from the slider groove according to a rotation of the rotating part.

The mobile communication terminal may further include a seating depression having a predetermined depth and provided on a predetermined portion of the upper surface of the main body, so that both the rotating part and the swing link are seated in the seating depression to be placed below the upper surface of the main body, with a bottom of the seating depression being contoured to allow the swing link to be turned in the seating depression within an angular range of less than 180° while the swing link is placed in the seating depression.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is an exploded perspective view of a mobile communication terminal of a slide type, according to a first embodiment of the present invention;
FIG. 2a is a partially broken front view showing an internal construction of a hinge of the mobile communication terminal of FIG. 1;
FIG. 2b is a sectional view taken along the line A-A' of FIG. 2a;
FIG. 2c is a development view of a slider of the hinge of FIG. 2a to show an operation of a streamlined cam relative to the slider;
FIG. 3a is a plan view of a main body of the mobile communication terminal of FIG. 1, in which a position of a swing link is shown when a cover is completely closed on the main body;
FIG. 3b is a plan view of the main body of the mobile communication terminal of FIG. 1, in which the position of the swing link is shown when the cover has been half-opened on the main body;
FIG. 3c is a plan view of the main body of the mobile communication terminal of FIG. 1, in which the position of the swing link is shown when the cover has been completely opened on the main body; and
FIG. 4 is a perspective view of a main body of a mobile communication terminal according to a second embodiment of the present invention, in which a plurality of support bands are respectively provided on predetermined portions of a seating depression of the main body.

### DESCRIPTION OF THE PREFERRED EMBODIMENTS

Hereinafter, embodiments of the present invention will be described in detail with reference to the attached drawings.

Reference now should be made to the drawings, in which the same reference numerals are used throughout the different drawings to designate the same or similar components.

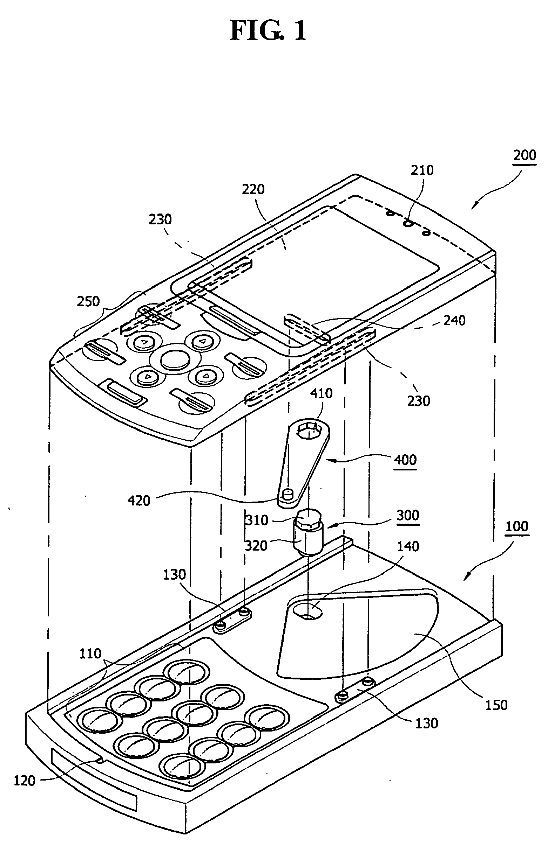

FIG. 1 is an exploded perspective view of a mobile communication terminal of a slide type, according to a first embodiment of the present invention.

As shown in FIG. 1, the mobile communication terminal of the slide type according to the first embodiment of the present invention includes a main body 100, a cover 200, a hinge 300 and a swing link 400. The main body 100 has a keypad 110 to input desired numerical and character data, and a microphone 120 to send audio data. The cover 200 has a speaker 210 to output audio data, an LCD display 220 to output video data, and a plurality of functional keys 250 to input signals for performance of special functions. The hinge 300 and the swing link 400 assist a sliding motion of the cover 200 which will be described later herein.

The mobile communication terminal further includes a slide projection 130 which is provided on each of both sides of an upper surface of the main body 100. The mobile communication terminal further includes a guide channel 230 which is longitudinally provided on each of predetermined portions of a lower surface of the cover 200, which is in contact with the upper surface of the main body 100, to correspond to and slide along each of the slide projections 130 of the main body 100.

In the mobile communication terminal, the cover 200 is assembled with the upper surface of the main body 100 while each of the slide projections 130 of the main body 100 is inserted into each of the guide channels 230 of the cover 200. Thus, the cover 200 executes a longitudinal sliding motion on the main body 100 while maintaining the assembled state thereof with the main body 100.

The above-mentioned construction of assembling the cover 200 with the main body 100 remains the same as that of conventional mobile communication terminals of slide types, and further explanation is thus not deemed necessary.

In the meantime, the hinge 300 includes a coupling part 320 which is inserted into a predetermined portion of the upper surface of the main body 100. The hinge 300 further includes a rotating part 310 which is provided on an upper end of the coupling part 320 so that the whole or a part of the rotating part 310 is exposed to an outside of the main body 100 while the coupling part 320 is inserted in the predetermined portion of the upper surface of the main body 100.

In the state in that the rotating part 310 is coupled to the coupling part 320, the rotating part 320 is rotated around a rotating axis thereof which is a central axis of the rotating part 320. At this time, the rotating part 310 is constructed to be rotated a half-turn at one time. That is, the rotating part 310 is rotated at an angular interval of 180°. Furthermore, the rotating part 310 is exposed to the outside of the main body 100 even while the coupling part 320 of the hinge 300 is inserted in the main body 100.

The mobile communication terminal further includes the swing link 400 which has a bar-shaped appearance and a predetermined length shorter than a width of the main body 100. The swing link 400 has at a first end thereof a hinge coupling hole 410 to couple the swing link 400 to the rotating part 310 of the hinge 300 such that the swing link 400 is placed to be perpendicular to the rotating axis of the rotating part 310. The swing link 400 further has at a second end thereof a link projection 420 which is projected toward the lower surface of the cover 200.

In the meantime, a hinge inserting hole 140 is provided on a predetermined portion of the upper surface of the main body 100, so that the coupling part 320 of the hinge 300 is inserted into the hinge inserting hole 140 of the main body 100. A seating depression 150 is provided on a predetermined portion of the upper surface of the main body 100 to prevent both the rotating part 310 of the hinge 300 and the swing link 400 from being interrupted by the cover 200 while the hinge 300 is inserted in the hinge inserting hole 400 of the main body 100.

The seating depression 150 has a predetermined depth to seat therein both the rotating part 310 and the swing link 400 such that the part 310 and the link 400 are placed below the upper surface of the main body 100. A bottom of the seating depression 150 has a sectorial appearance having a radius longer than the length of the swing link 400, thus allowing the swing link 400 to be turned in the seating depression 150 within an angular range of less than 180° while the swing link 400 is placed in the seating depression 150.

At this time, the swing link 400 is turned in the seating depression 150 until the swing link 400 is in contact with one of both sidewalls of the seating depression 150. Therefore, the angular range of the rotation of the swing link 400 is set by an interior angle of the seating depression 150.

In the meantime, a link slot 240, which has a predetermined size to receive the link projection 420 of the swing link 400 therein, is provided on a predetermined portion of the lower surface of the cover 200 while extending in the latitudinal direction of the cover 200.

Furthermore, the link slot 240 has a predetermined length longer than a maximum sliding distance of the link projection 420 in the latitudinal direction. That is, on the supposition that the longitudinal axis of the main body 100 is a y-axis and the latitudinal axis of the main body 100 is an x-axis, the length and position of the link slot 240 are determined to include every coordinates of the link projection 420 on the x-axis on a track of the link projection 420 defined by the rotation of the swing link 400.

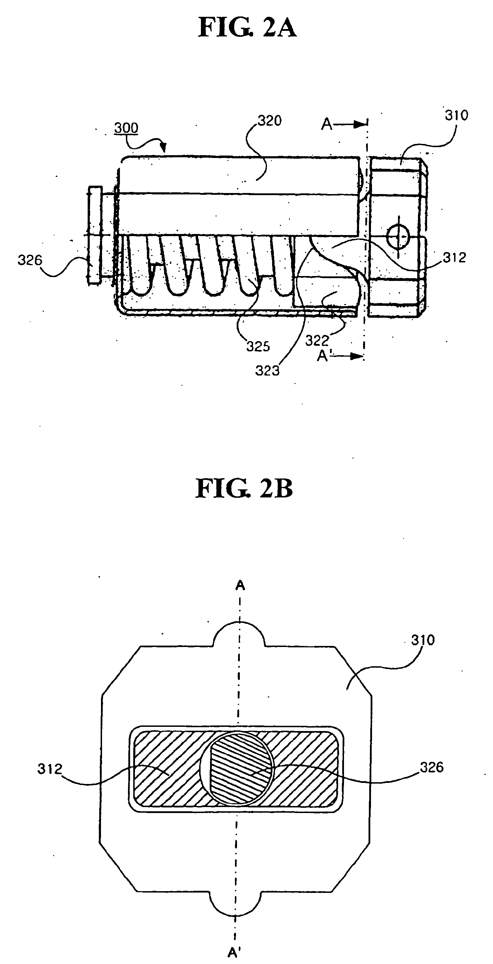

FIG. 2a is a partially broken front view showing an internal construction of the hinge 300 of the mobile communication terminal of FIG. 1. FIG. 2b is a sectional view taken along the line A-A' of FIG. 2a.

As shown in FIG. 2a, the hinge 300 is divided into the coupling part 320, which is inserted into the hinge inserting hole 140 of the main body 100 to couple the hinge 300 to the main body 100, and the rotating part 310 which is inserted into the hinge coupling hole 410 of the swing link 400 so that the rotating part 310 along with the swing link 400 is rotated.

Referring to FIG. 2b, the rotating part 310 of the hinge 300 includes a streamlined cam 312 which is provided on an inner end of the rotating part 310 and is perpendicular to and symmetrical on the rotating axis of the rotating part 310. The streamlined cam 312 has a predetermined width in a direction to cross the rotating axis of the rotating part 310.

The coupling part 320 of the hinge 300 includes a shaft 326 which is coupled at an end thereof to the rotating part 310 while being axially inserted into a housing of the coupling part 320, and a spring 325 which is placed in the housing to surround the shaft 326. The coupling part 320 further includes a slider 322 which is provided between the spring 325 and the streamlined cam 312 of the rotating part 310 to be in contact with the cam 312 and has a streamlined slider groove 323 to receive therein the cam 312. Thus, the slider 322 linearly moves in a longitudinal direction of the shaft 326 according to a contact point on which the slider 322 is in contact with the streamlined cam 312.

In the hinge 300 having the above-mentioned structure, the rotating part 310 is inserted in the hinge coupling hole 410 of the swing link 400, while the coupling part 320 is inserted in the hinge inserting hole 140 of the main body 100. When the swing link 400 is turned around the hinge 300, the rotating part 310 is rotated along with the swing link 400, while the coupling part 320 is fastened in the hinge inserting hole 140 of the main body 100 without being undesirably rotated. To achieve the above-mentioned operation of the hinge 300, the rotating part 310, the hinge coupling hole 410, the coupling part 320 and the hinge inserting hole 140 each define a cross-section having at least one angled edge or an asymmetrically-shaped appearance.

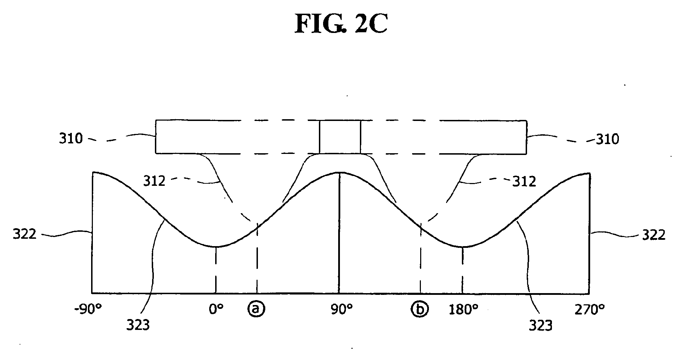

FIG. 2c is a development view of the slider 322 of the hinge 300 of FIG. 2a to show an operation of the streamlined cam 312 relative to the slider 322.

As shown in FIG. 2c, the slider 322 of the coupling part 320 of the hinge 300 includes the streamlined slider groove 323 which has a concave surface to cross the central axis of the hinge 300. The streamlined cam 312 of the rotating part 310 of the hinge 300 is repeatedly seated into and removed from the slider groove 323 according to the rotation of the rotating part 310.

That is, when the streamlined cam 312 along with the rotating part 310 is turned from the state in that the streamlined cam 312 is seated in the slider groove 323 to a position of the slider 322 that is designated by the reference coordinate 90° of FIG. 2c, the streamlined cam 312 is completely removed from the slider groove 323. When the streamlined cam 312 along with the rotating part 310 is further turned to exceed the position of the reference coordinate 90° of FIG. 2c, the streamlined cam 312 is elastically seated again into the slider groove 323.

At this time, referring to FIG. 2c, in case that the rotating part 310 is turned within an angular range of the reference coordinates 0° to 90° of FIG. 2c, the streamlined cam 312 along with the rotating part 310 intends to move along the upper surface of the slider 322 to a position on the slider 322 that is designated by the reference coordinate 0° of FIG. 2c, and at which the cam 312 is seated in the slider groove 323. Otherwise, when the rotating part 310 is turned within an angular range of the reference coordinates 90° to 180° of FIG. 2c, the streamlined cam 312 along with the rotating part 310 intends to move along the upper surface of the slider 322 to a position on the slider 322 that is designated by the reference coordinate 180° of FIG. 2c, and at which the cam 312 is seated in the slider groove 323.

In the meantime, when the rotating part 310 is placed on a predetermined position of the upper surface of the slider 322 that is designated by the reference coordinate 90° of FIG. 2c, the streamlined cam 312 along with the rotating part 310 is maintained at a neutral state in that the streamlined cam 312 is removed from the slider groove 323 without moving in any directions.

The operation of the hinge 300 of the mobile communication terminal of the present invention will be described herein below.

While the streamlined cam 312 is seated in the slider groove 323, as shown in FIG. 2a, the rotating part 310 of the hinge 300 is coupled to the swing link 400 and the coupling part 320 of the hinge 300 is inserted into the hinge inserting hole 140 of the main body 100. In above state, when the swing link 400 is turned around the central axis of the hinge 300 in a predetermined direction, the rotating part 310 of the hinge 300 is rotated along with the swing link 400 in the same direction. By the rotation of the rotating part 310, the slider 322 of the coupling part 320 is linearly moved within a predetermined distance, defined by a depth of the slider groove 323 of the slider 322, in a direction to compress the spring 325 while the streamlined cam 312 of the rotating part 310 is in contact with the slider groove 323. Referring to FIG. 2c, when the streamlined cam 312 along with the rotating part 310 is further rotated to exceed the position designated by the reference coordinate 90° of FIG. 2c, the slider 322 is quickly moved linearly in an opposite direction by an elastic force of the spring 325. Therefore, the streamlined cam 312 of the rotating part 310 is again seated into the slider groove 323.

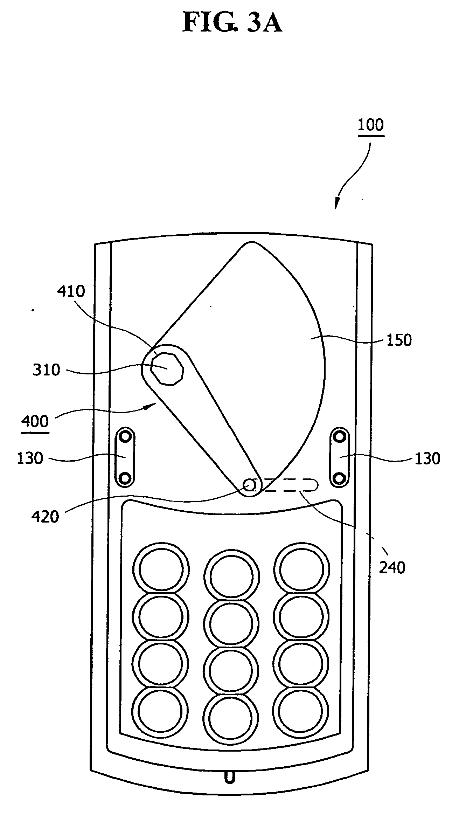

FIG. 3a is a plan view of the main body 100 of the mobile communication terminal of FIG. 1, in which a position of the swing link 400 is shown when the cover 200 is completely closed position on the main body 100.

As shown in FIG. 3a, in case that the swing link 400 is in close contact with the lower sidewall of the seating depression 150, the cover 200 (not shown in FIG. 3a) closes the main body 100. That is, the cover 200 is completely overlapped on top of the main body 100. The link projection 420 of the swing link 400, inserted in the link slot 240 of the cover 200 to slide along the link slot 240, is placed at an inner end of the link slot 240.

At this time, the streamlined cam 312 of the rotating part 300 is placed on a predetermined position of the upper surface of the slider 322 that is designated by the reference character ⓐ of FIG. 2c. In the above state, the streamlined cam 312 is forced in a direction toward the position on the upper surface of the slider 322 that is designated by the reference coordinate 0° of FIG. 2c. Thus, the rotating part 310 of the hinge 300 is biased by a predetermined force to be further turned clockwise.

However, because the swing link 400 is in close contact with the lower sidewall of the seating depression 150 of the main body 100, the rotating part 310, coupled to the swing link 400, is stopped without being further rotated clockwise. Thus, the streamlined cam 312 is not completely seated on the position of the slider 322 that is designated by the reference coordinate 0° of FIG. 2c, but is stopped on the position of the slider 322 that is designated by the reference character ⓐ of FIG. 2c.

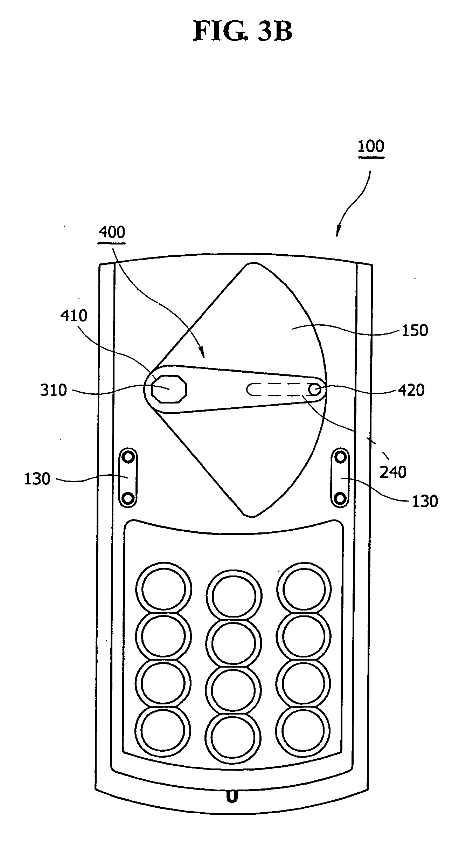

FIG. 3b is a plan view of the main body 100 of the mobile communication terminal of FIG. 1, in which the position of the swing link 400 is shown when the cover 200 has been half-opened on the main body 100.

As shown in FIG. 3b, when the swing link 400 is turned counterclockwise to be parallel with the latitudinal direction of the main body 100 from the state of FIG. 3a, the cover 200 is half-opened on the main body 100.

At this time, the link projection 420 of the swing link 400 slides along the link slot 240 of the cover 200 toward an outer end of the link slot 240, so that the cover 200 is half-opened on the main body 100. The streamlined cam 312 in the above state is placed on the position of the upper surface of the slider 322 that is designated by the reference coordinate 90° of FIG. 2c.

Furthermore, the streamlined cam 312 is stopped without being forced to enter the slider groove 323. Therefore, any rotating force is not applied to the rotating part 310 or the swing link 400.

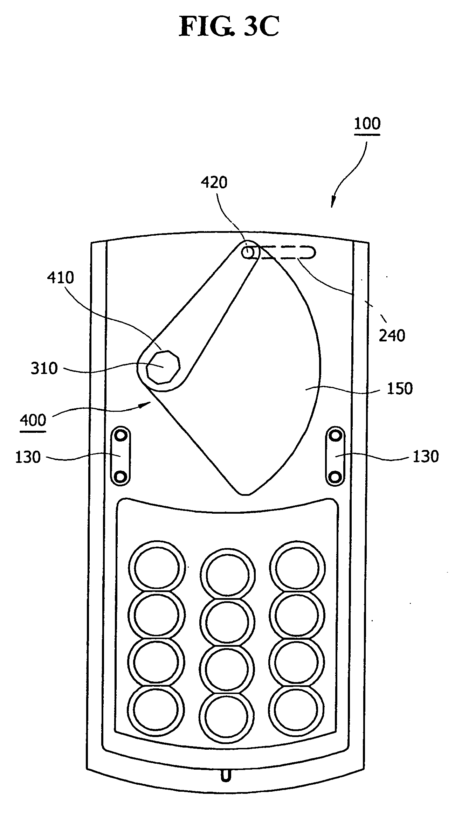

FIG. 3c is a plan view of the main body 100 of the mobile communication terminal of FIG. 1, in which the position of the swing link 400 is shown when the cover 200 has been completely opened on the main body 100.

As shown in FIG. 3c, when the swing link 400 is turned to be in contact with the upper sidewall of the seating depression 150 from the state of FIG. 3a through the state of FIG. 3b, the cover 200 is completely opened on the main body 100.

At this time, the link projection 420 of the swing link 400 slides along the link slot 240 of the cover 200 toward the inner end of the link slot 240, so that the cover 200 is completely opened on the main body 100. The streamlined cam 312 in the above state is placed on a position of the upper surface of the slider 322 that is designated by the reference character ⓑ of FIG. 2c.

Therefore, the streamlined cam 312 is forced in a direction toward the position on the upper surface of the slider 322 that is designated by the reference coordinate 180° of FIG. 2c. The rotating part 310 of the hinge 300 in the above state is biased by a predetermined force to be further turned counterclockwise.

However, because the swing link 400 is in close contact with the upper sidewall of the seating depression 150 of the main body 100, the rotating part 310, coupled to the swing link 400, is stopped without being further rotated counterclockwise. Thus, the streamlined cam 312 is not completely seated on the position of the slider 322 that is designated by the reference coordinate 180° of FIG. 2c, but is stopped on the position of the slider 322 that is designated by the reference character ⓑ of FIG. 2c.

In a brief description, the cover 200 is forced to be closed on the main body 100 when the cover 200 is in a positional range from the completely closed state to the about half-opened state. Otherwise, the cover 200 is forced to be opened on the main body 100 when the cover 200 is in a positional range from the about half-opened state to the completely opened state.

Therefore, when a user opens the cover 200, which has been closed on the main body 100, to any position exceeding the half of the cover opening range, the cover 200 is automatically opened on the main body 100 to the position at which the cover 200 is completely opened. When the user closes the cover 200, which has been opened on the main body 100, to any position exceeding the half of the cover closing range, the cover 200 is automatically closed on the main body 100 to the position at which the cover 200 is completely closed. As such, the mobile communication terminal of the present invention is more convenient to the user.

In the first embodiment of the present invention, the slider groove 323 of the hinge 300 is symmetrical, based on the central axis of the hinge 300. Thus, when the cover 200 is opened to the precise half of the range of opening the cover 200 on the main body 100, the cover 200 is stopped on the main body 100 to maintain the neutral state. However, the slider groove 323 may have an asymmetrical shape, so that the position to maintain the neutral state of the cover 200 may be changed.

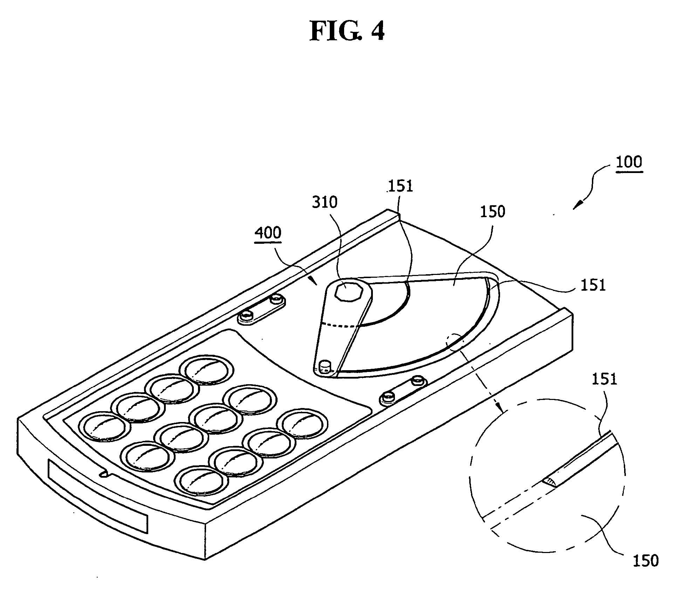

FIG. 4 is a perspective view of a main body 100 of a mobile communication terminal according to a second embodiment of the present invention, in which a plurality of support bands 151 are respectively provided on predetermined portions of the seating depression 150 of the main body 100.

As shown in FIG. 4, the mobile communication terminal according to the second embodiment includes the plurality of support bands 151 which are respectively provided on the predetermined portions of the seating depression 150 of the main body 100. Thus, each of the plurality of support bands 151 is in contact with a lower surface of the swing link 400. Therefore, during the rotation of the swing link 400, a rotating force of the swing link 400 is increased by reducing the friction from being caused between the swing link 400 and the bottom of the seating depression 150.

That is, each of the support bands 151, which has an arc shape of a predetermined radius of curvature, is provided on each of the predetermined portions of the bottom of the seating depression 150 to be projected to a predetermined height. Thus, the contact area of the lower surface of the swing link 400 relative to the support bands 151 is reduced. At this time, the support band 151 may comprise one or two bands according to the constructed portion thereof.

As such, by the reduction of the contact area between the swing link 400 and the seating depression 150, the friction applied to the swing link 400 is also reduced. Thus, the swing link 400 is smoothly rotated in the seating depression 150.

As described above, the present invention provides a mobile communication terminal of a slide type, which has a structure possible to stably place the cover at a completely opened or completely closed position on the main body without any stopper when a user opens or closes the cover on the main body. Therefore, the mobile communication terminal of the present invention is advantageous in that the cover is not undesirably moved on the main body during the cover opening or closing process, thus preventing an incorrect operation of the terminal from being undesirably caused in the cover-opened or closed state.

Furthermore, in the mobile communication terminal of the present invention, even when the cover is opened on the main body to any position exceeding the half of the range of opening the cover without being completely opened, the cover is automatically opened to the position at which the cover is completely opened. In the same manner as that of opening the cover, even when the cover is closed on the main body to any position exceeding the half of the range of closing the cover without being completely closed, the cover is automatically closed on the main body to the position at which the cover is completely closed. Therefore, the mobile communication terminal of the present invention is more convenient to the user.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A mobile communication terminal of a slide type, comprising:
a main body (100);
a cover (200) assembled with an upper surface of the main body (100) to slide longitudinally on the main body (100); and
a slide control unit adapted to apply an opening force to the cover in an opening direction when the cover (200) has slid in the opening direction on the main body (100) to reach at least a predetermined opened position, and adapted to apply a closing force to the cover (200) in a closing direction when the cover (200) has slid in the closing direction on the main body (100) to reach at least a predetermined closed position, **characterized in that**
the slide control unit comprises:
a hinge (300), comprising:
a coupling part (320) inserted into a predetermined portion of the upper surface of the main body (100); and
a rotating part (310) provided on an upper end of the coupling part so that at least a part of the rotating part (310) is exposed to an outside of the main body (100) while the coupling part (320) is inserted in the predetermined portion of the upper surface of the main body (100), the rotating part (310) is adapted to be rotated around a rotating axis thereof which is perpendicular to the upper surface of the main body (100); and
a swing link (400) having a bar-shaped appearance and a predetermined length shorter than a width of the main body (100), with a first end coupled to the rotating part (310) of the hinge (300) to allow the swing link (400) to be perpendicular to the rotating axis of the rotating part (310), and a second end coupled to a lower surface of the cover (200) to slide on the lower surface of the cover (200) in a latitudinal direction of the cover (200).

2. The mobile communication terminal according to claim 1, further comprising:
at least one guide channel (230) having a predetermined length in a direction of a sliding motion of the cover (200) and provided on a predetermined portion of a contact surface of the cover (200) which is in contact with the main body (100); and
a slide projection (130) provided on a predetermined portion of a contact surface of the main body (100) to correspond to the guide channel (230) of the cover (200), so that the slide projection (130) slides along the guide channel (230) while being coupled to the guide channel (230).

3. The mobile communication terminal according to claim 1 or 2, wherein the rotating part (310) of the hinge (300) comprises:
a streamlined cam (312) provided on an inner end of the rotating part (310), and
the coupling part (320) of the hinge (300) comprises:
a shaft (326) coupled at an end thereof to the rotating part (310) while being axially inserted in the coupling part (320);
a spring (325) placed to surround the shaft (326); and
a slider (322) provided between the spring (325) and the streamlined cam (312) to move in a longitudinal direction of the shaft (326), with a streamlined slider groove (323) to allow the streamlined cam (312) to be seated into and removed from the slider groove (323) according to a rotation of the rotating part (310).

4. The mobile communication terminal according to claim 3, wherein the streamlined cam (312) is seated in the streamlined slider groove (323) at an angular interval of 180°.

5. The mobile communication terminal according to claim 3 or 4, further comprising:
a seating depression (150) having a predetermined depth and provided on a predetermined portion of the upper surface of the main body (100), so that both the rotating part (310) and the swing link (400) are seated in the seating depression (150) to be placed below the upper surface of the main body (100), with a bottom of the seating depression (150) being contoured to allow the swing link (400) to be turned in the seating depression (150) within an angular range of less than 180° while the swing link (400) is placed in the seating depression (150).

6. The mobile communication terminal according to any one of the preceding claims, further comprising:
a link projection (420) provided on the second end of the swing link (400) while extending toward the lower surface of the cover (200) to be coupled to the lower surface of the cover (200); and
a link slot (240) having a predetermined size to receive the link projection (420) of the swing link (400) therein, the link slot (240) being provided on a predetermined portion of the lower surface of the cover (200) while extending in the latitudinal direction of the cover (200).

## Patentansprüche

1. Mobiles Kommunikationsendgerät mit Schub-Mechanismus mit
einem Hauptkörper (100);
einer Abdeckung (200), die an einer Oberseite des Hauptkörpers (100 angebracht und in Längsrichtung des Hauptkörpers (100) verschiebbar ist; und
einer Schub-Steuereinheit, die dazu eingerichtet ist, eine Öffnungskraft in eine Öffnungsrichtung auf die Abdeckung zu übertragen, wenn die Abdeckung (200) auf dem Hauptkörper (100) in die Öffnungsrichtung verschoben wurde, um wenigstens eine vorgegebene geöffnete Position zu erreichen, und die dazu eingerichtet ist, eine Schließkraft in eine Schließrichtung auf die Abdeckung (200) zu übertragen, wenn die Abdeckung (200) auf dem Hauptkörper (100) in die Schließrichtung verschoben wurde, um wenigstens eine vorgegebene Schließposition zu erreichen, **dadurch gekennzeichnet, dass**
die Schub-Steuereinheit folgende Merkmale aufweist:
ein Scharnier (300) mit:
einem Verbindungsteil (320), das in einen vorgegebenen Abschnitt der Oberseite des Hauptkörpers (100) eingefügt ist; und
einem Drehteil (310), das an einem oberen Ende des Verbindungsteils angeordnet ist, so dass wenigstens ein Teil des Drehteils (310) an einer Außenseite des Hauptkörpers (100) frei liegt, wenn das Verbindungsteil (320) in den vorgegebenen Abschnitt der Oberseite des Hauptkörpers (100) eingefügt ist, wobei das Drehteil (310) dazu geeignet ist, um seine Drehachse gedreht zu werden, wobei die Drehachse senkrecht zur Oberseite des Hauptkörpers (100) ist; und
ein Schwenkgelenk (400) mit einem stabförmigen Erscheinungsbild und einer vorgegebenen Länge, die kürzer ist als eine Breite des Hauptkörpers (100), wobei ein erstes Ende mit dem Drehteil (310) des Scharniers (300) verbunden ist, so dass das Schwenkgelenk (400) senkrecht zur Drehachse des Drehteils (310) sein kann, und wobei ein zweites Ende mit einer Unterseite der Abdeckung (200) verbunden ist, um auf der Unterseite der Abdeckung (200) in Längsrichtung der Abdeckung (200) zu gleiten.

2. Mobiles Kommunikationsendgerät nach Anspruch 1, mit den weiteren Merkmalen:
wenigstens ein Führungskanal (230) mit einer vorgegebenen Länge in einer Richtung einer Schiebebewegung der Abdeckung (200), der in einem vorgegebenen Abschnitt einer Kontaktfläche der Abdeckung (200), die mit dem Hauptkörper (100) in Kontakt ist, vorgesehen ist; und
ein Schiebe-Vorsprung (130), der in einem vorgegebenen Abschnitt einer Kontaktfläche des Hauptkörpers (100), welche dem Führungskanal (230) der Abdeckung (200) entspricht, vorgesehen ist, so dass der Schiebe-Vorsprung (130) entlang des Führungskanals (230) gleitet, wenn er mit dem Führungskanal (230) in Verbindung steht.

3. Mobiles Kommunikationsendgerät nach Anspruch 1 oder 2, wobei das Drehteil (310) des Scharniers (300) folgendes Merkmal aufweist:
ein stromlinienförmiger Nocken (312), der an einem Innenende des Drehteils (310) vorgesehen ist, und
wobei das Verbindungsteil (320) des Scharniers (300) folgende Merkmale aufweist:
eine Welle (326), die an ihrem einen Ende mit dem Drehteil (310) verbunden ist, während sie axial in das Verbindungsteil (320) eingesetzt wird;
eine Feder (325), welche die Welle (326) umgibt; und
ein Schieber (322), der zwischen der Feder (325) und dem stromlinienförmigen Nocken (312) angeordnet und in einer Längsrichtung der Welle (326) bewegbar ist, wobei eine stromlinienförmige Schieberrille (323) es erlaubt, den stromlinienförmigen Nocken (312) abhängig von der Drehung des Drehteils (310) in der Schieberrille (323) zu positionieren und aus dieser zu entfernen.

4. Mobiles Kommunikationsendgerät nach Anspruch 3, wobei der stromlinienförmige Nocken (312) mit einem Winkelintervall von 180° in der stromlinienförmigen Schieberrille (323) sitzt.

5. Mobiles Kommunikationsendgerät nach Anspruch 3 oder 4, mit weiterhin:
einer Sitzvertiefung (150), die eine vorgegebene Tiefe hat und in einem vorgegebenen Abschnitt der Oberseite des Hauptkörpers (100) vorgesehen ist, so dass sowohl das Drehteil (310) als auch das Schwenkgelenk (400) in der Sitzvertiefung (150) derart sitzen, dass sie unter der Oberseite des Hauptkörpers (100) angeordnet sind, wobei ein Boden der Sitzvertiefung (150) so konturiert ist, dass das Schwenkgelenk (400) in der Sitzvertiefung (150) mit einem Winkelbereich von weniger als 180° gedreht werden kann, während das Schwenkgelenk (400) in der Sitzvertiefung (150) ist.

6. Mobiles Kommunikationsendgerät nach einem der vorangehenden Ansprüche, mit den weiteren Merkmalen:
ein Gelenkvorsprung (420), der an dem zweiten Ende des Schwenkgelenks (400) vorgesehen ist und sich in Richtung der Unterseite der Abdeckung (200) erstreckt, um mit der Unterseite der Abdeckung (200) verbunden zu werden; und
ein Gelenkschlitz (240) mit einer vorgegebenen Größe zum Aufnehmen des Gelenkvorsprungs (420) des Schwenkgelenks (400) darin, wobei der Gelenkschlitz (240) in einem vorgegebenen Abschnitt der Unterseite der Abdeckung (200) vorgesehen ist und sich in der Längsrichtung der Abdeckung (200) erstreckt.

## Revendications

1. Terminal de communication mobile de type coulissant, comprenant :
un corps principal (100) ;
un couvercle (200) monté sur une surface supérieure du corps principal (100) pour coulisser longitudinalement sur le corps principal (100) ; et
un élément de commande de coulissement apte à appliquer au couvercle une force d'ouverture dans une direction d'ouverture lorsque le couvercle (200) a coulissé dans la direction d'ouverture sur le corps principal (100) pour atteindre au moins une position ouverte prédéterminée, et apte à appliquer au couvercle (200) une force de fermeture dans une direction de fermeture lorsque le couvercle (200) a coulissé dans la direction de fermeture sur le corps principal (100) pour atteindre au moins une position fermée prédéterminée, **caractérisé en ce que** :
l'élément de commande de coulissement comprend :
une articulation (300), comprenant :
une partie de couplage (320) insérée dans une partie prédéterminée de la surface supérieure du corps principal (100) ; et
une partie pivotante (310) prévue sur une extrémité supérieure de la partie de couplage de telle sorte qu'au moins une partie de la partie pivotante (310) est exposée vers l'extérieur du corps principal (100) tandis que la partie de couplage (320) est insérée dans la partie prédéterminée de la surface supérieure du corps principal (100), la partie pivotante (310) étant apte à être tournée autour d'un axe de rotation qui est perpendiculaire à la surface supérieure du corps principal (100) ; et
une liaison oscillante (400) ayant une forme de barre et une longueur prédéterminée plus courte que la largeur du corps principal (100), une première extrémité étant couplée à la partie pivotante (310) de l'articulation (300) pour permettre à la liaison oscillante (400) d'être perpendiculaire à l'axe de rotation de la partie pivotante (310), et une deuxième extrémité étant couplée à une surface inférieure du couvercle (200) pour coulisser sur la surface inférieure du couvercle (200) dans une direction transversale du couvercle (200).

2. Terminal de communication mobile selon la revendication 1, comprenant en outre :
au moins un canal de guidage (230) ayant une longueur prédéterminée dans une direction de mouvement coulissant du couvercle (200) et prévu sur une partie prédéterminée d'une surface de contact du couvercle (200) qui est en contact avec le corps principal (100) ; et
une saillie de glissière (130) prévue sur une partie prédéterminée d'une surface de contact du corps principal (100) pour correspondre au canal de guidage (230) du couvercle (200), de sorte que la saillie de glissière (130) coulisse suivant le canal de guidage (230) tout en étant couplée au canal de guidage (230).

3. Terminal de communication mobile selon la revendication 1 ou 2, dans lequel :
la partie pivotante (310) de l'articulation (300) comprend une came profilée (312) prévue sur une extrémité intérieure de la partie pivotante (310), et
la partie de couplage (320) de l'articulation (300) comprend :
un axe (326) couplé à une de ses extrémités à la partie pivotante (310) tout en étant inséré axialement dans la partie de couplage (320) ;
un ressort (325) placé de façon à entourer l'axe (326) ; et
un curseur (322) prévu entre le ressort (325) et la came profilée (312) pouvant se déplacer dans une direction longitudinale de l'axe (326), avec une gorge de curseur profilée (323) pour permettre à la came profilée (312) d'être logée dans la gorge de curseur (323) et d'en être retirée en fonction de la rotation de la partie pivotante (310).

4. Terminal de communication mobile selon la revendication 3, dans lequel la came profilée (312) est logée dans la gorge de curseur profilée (323) avec un intervalle angulaire de 180°.

5. Terminal de communication mobile selon la revendication 3 ou 4, comprenant en outre un évidement de logement (150) ayant une profondeur prédéterminée et prévu sur une partie prédéterminée de la surface supérieure du corps principal (100), de sorte que la partie pivotante (310) et la liaison oscillante (400) sont logées dans l'évidemment de logement (150) pour être placées en dessous de la surface supérieure du corps principal (100), une partie inférieure de l'évidement de logement (150) ayant un contour permettant à la liaison oscillante (400) d'être tournée dans l'évidement de logement (150) avec une plage angulaire inférieure à 180° tandis que la liaison oscillante (400) est placée dans l'évidement de logement (150).

6. Terminal de communication mobile selon l'une quelconque des revendications précédentes, comprenant en outre :
une saillie de liaison (420) prévue sur la deuxième extrémité de la liaison oscillante (400) et s'étendant en direction de la surface inférieure du couvercle (200) pour être couplée à la surface inférieure du couvercle (200) ; et
une fente de liaison (240) ayant une dimension prédéterminée pour recevoir la saillie de liaison (420) de la liaison oscillante (400), la fente de liaison (240) étant prévue sur une partie prédéterminée de la surface inférieure du couvercle (200) et s'étendant dans la direction transversale du couvercle (200).
